# EUROPÄISCHE PATENTSCHRIFT

(11) **EP 3 177 453 B1**
(45) Veröffentlichungstag und Bekanntmachung des Hinweises auf die Patenterteilung: **12.02.2020**
(21) Anmeldenummer: 15770785.2
(22) Anmeldetag: 06.08.2015
(51) Int. Cl.: B29C 67/00, B33Y 30/00, B41J 2/14

(54) **DRUCKKOPF UND SEINE VERWENDUNG IN EINEM 3D-DRUCKVERFAHREN**
PRINT HEAD AND USE THEREOF IN A 3D-PRINTING METHOD
TÊTE D'IMPRESSION ET SON UTILISATION DANS UN PROCÉDÉ D'IMPRESSION 3D

(30) Priorität: 08.08.2014 DE 102014011544
(43) Veröffentlichungstag der Anmeldung: 14.06.2017
(73) Patentinhaber: voxeljet AG, 86316 Friedberg (DE)
(72) Erfinder: EDERER, Ingo, 82269 Geltendorf (DE); GÜNTHER, Daniel, 81317 München (DE); GRASEGGER, Josef, 86391 Stadtbergen (DE)
(74) Vertreter: Helbig, Christian
(86) Internationale Anmeldenummer: PCT/DE2015/000396
(87) Internationale Veröffentlichungsnummer: WO 2016/019942

(56) Entgegenhaltungen:
- WO-A2-2005/014292
- WO-A2-2013/006399

## Beschreibung

Die Erfindung bezieht sich auf einen Druckkopf sowie dessen Verwendung und ein 3D-Druckverfahren.

Aus der WO 2013/006399 A2 ist ein Druckkopf zum selektiven Auftragen von Druckfluid auf ein Partikelmaterial beim Herstellen dreidimensionaler Modelle mittels Schichtaufbautechnik bekannt, bei dem Druckkopftank und Druckkopfmodule in einem monolithischen Körper eingebettet sind.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Tintenstrahldruckkopfes mit einer Flüssigkeit bedruckt. Im mit der Flüssigkeit bedruckten Bereich verbinden sich die Partikel und der Bereich verfestigt unter dem Einfluss der Flüssigkeit und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden.

Das 3D-Drucken auf Basis pulverförmiger Werkstoffe und Eintrag von Flüssigkeiten mit einem Druckkopf ist unter den Schichtbautechniken das schnellste Verfahren.

Mit diesem Verfahren lassen sich verschiedene Partikelmaterialien, dazu zählen - nicht erschöpfend - natürliche biologische Rohstoffe, polymere Kunststoffe, Metalle, Keramiken und Sande, verarbeiten.

Als Bindesystem kann z.B. ein Feststoff im Partikelmaterial dienen. Dieser wird durch ein aus dem Tintenstrahldruckkopf ausgestoßenes Lösemittel in Lösung gebracht. Nach dem Verflüchtigen des Lösemittels haften die Partikel an den gewünschten Stellen zusammen. Das Bauteil kann aus dem restlichen losen Pulver nach einer gewissen Wartezeit entnommen werden.

Das Lösemittel wird dabei aus einer großen Anzahl von Stoffgruppen ausgewählt. Hierbei werden häufig organische Lösemittel verwendet, die für diese Anwendung geeigneten Kunststoffe durchdringen dabei Moleküle unterschiedlicher Partikel. Ebenso wichtig sind Säure und Basen, die metallische Strukturen je nach Metall zersetzen.

Auch können polymerisierende Flüssigkeiten für das Binden der Partikel verwendet werden. Diese gehen vom flüssigen in einen festen Zustand über, wenn die Polymerisationsreaktion gestartet wird. Der Start kann über Temperatur, Strahlung oder über das Zusammenkommen mit einem Katalysator oder Initiator erfolgen. Bei vielen Systemen wirken Metallionen katalytisch.

Der Tintenstrahldruckkopf selbst ist aus einer Reihe von Elementen aufgebaut. Dazu zählen Tanks, Ventile, Schläuche, Verbinder, Filter, und die Druckmodule, die die eigentliche Druckfunktion ausführen.

Alle mit Fluid in Kontakt befindlichen Element sollten den oben genannten Flüssigkeiten möglichst lange wiederstehen können und das Fluid selbst nicht beeinflussen.

Die Druckmodule selbst müssen äußerst exakt im Druckkopf positioniert werden. Ihre Lage bestimmt nicht zuletzt die geometrische Genauigkeit der mit dem Verfahren erzeugten Bauteile. Im Allgemeinen werden für die Träger der Module Metalle eingesetzt. Damit wird eine hohe Genauigkeit, Stabilität und Temperaturbeständigkeit der Ausrichtung erreicht.

Der Metallkontakt in den Modulen lässt sich herstellungsbedingt oft nicht vermeiden. Wirkt das Metall auf das Fluid kann die Wirkung durch regelmäßiges Spülen reduziert werden. Eine Wirkung im Fluidsystem vor dem Modul muss aber unbedingt vermieden werden, da das Fluid dann vorgeschädigt in das Modul gelangt.

Oft wird in diesem Bereich das Fluid durch Metall geführt, um eine kompakte Konstruktion zu erzielen. Für viele der oben genannten Fluide kann eine solche Konstruktion nicht verwendet werden.

Lösemittel quellen Kunststoffe und Dichtungen. Dieser Vorgang führt zu einem geometrischen Verzug und im Extremfall zum Verlust der Funktion. Im Falle der Dichtungen entsteht dabei zusätzlich eine Leckage, die weitere kostenintensive Folgeschäden oder ein Gesundheitsrisiko darstellen kann. Der Lösevorgang kann bei ungünstiger Wahl auch zu einer Veränderung des Fluides durch Aufnahme von Dichtmaterial führen.

Wässrige Flüssigkeiten können zur Korrosion von Bauteilen im Fluidsystem führen. Dabei entstehen Korrosionsprodukte die schädlich für die Mikrodüsen der Module sein können. Ebenso werden Metallionen freigesetzt die verschiedene Reaktionen zur Folge haben können.

Im Fall von Silikaten im Fluid führen die Metallionen zu einem Gelieren des Fluides. Entsteht oder gelangt ein solches Gel in die Mikrokanäle des Moduls wird das Modul unbrauchbar.

Polymerisierende Fluide sind wie oben beschrieben durch Metallionen beeinflussbar. Hier wirken die Ionen oft katalytisch. Wiederum entstehen Gele, die die Module gefährden.

Ein Ansatz zur Lösung der Problemstellung liegt darin, die positionsbestimmenden Teile aus Kunststoff zu fertigen.

Dabei können Lösungen gefunden werden, die eine sichere Positionierung der Module ermöglichen. Unterschiedliche Temperaturen führen allerdings zu erheblichen geometrischen Veränderungen, so dass die geforderten Genauigkeiten nicht erzielt werden können.

Durch ein geringes Quellen selbst beständigster Kunststoffe wie Teflon kann ebenso eine Langzeitwirkung in Form einer Deformation auftreten.

Eine Beschichtung der metallischen Teile ist je nach eingesetztem Lösemittel wirksam. Die zum Teil sehr verwinkelten Miniaturkanäle sind allerdings schwer zu beschichten und eine sichere Funktion der Schutzschicht ist nicht zu überprüfen.

Der Einsatz von keramischen oder glaskeramischen Werkstoffen steht derzeit fertigungstechnisch und wirtschaftlich außer Frage.

Im Folgenden werden einige Begriffe der Erfindung näher erläutert.

Im Sinne, der Erfindung sind "3D-Druckverfahren" alle aus dem Stand der Technik bekannten Verfahren, die den Aufbau von Bauteilen in dreidimensionalen Formen ermöglichen und mit den beschriebenen Verfahrenskomponenten und Vorrichtungen kompatibel sind.

"Selektiver Binderauftrag" oder "Selektiver Bindersystemauftrag" kann im Sinne der Erfindung nach jedem Partikelmaterialauftrag erfolgen oder je nach den Erfordernissen des Formkörpers und zur Optimierung der Formkörperherstellung auch unregelmäßig erfolgen, d.h. nicht linear und parallel nach jedem Partikelmaterialauftrag. "Selektiver Binderauftrag" oder "Selektiver Bindersystemauftrag" kann somit individuell und im Verlauf der Formkörperherstellung eingestellt werden.

"Formkörper" oder "Bauteil" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile, Dosiervorrichtung und Wärmemittel und andere dem Fachmann bekannte Bauteile, die deshalb hier nicht näher ausgeführt werden.

Als "Partikelmaterialien" können alle für den Pulver-basierten 3D Druck bekannten Materialien verwendet werden, insbesondere Sande, Keramikpulver, Metallpulver, Kunststoffe, Holzpartikel, Faserwerkstoffe, Cellulosen oder/und Lactosepulver. Das Partikelmaterial ist vorzugsweise ein trocken frei fließendes Pulver, aber auch ein kohäsives schnittfestes Pulver kann verwendet werden.

"Bauraum" ist der geometrische Ort in dem die Partikelmaterialschüttung während des Bauprozesses durch wiederholtes Beschichten mit Partikelmaterial wächst. Im Allgemeinen wird der Bauraum durch einen Boden, die Bauplattform, durch Wände und eine offene Deckfläche, die Bauebene, begrenzt.

"Druckmodul" ist die Bezeichnung für einen modular aufgebauten Einzeltropfenerzeuger mit mehreren Düsen. Die Düsen und inneren Strukturen sind oft mikrotechnische Produkte.

Das "Positioniersystem" erlaubt es ein Druckmodul relativ zu einer Druckmodulaufnahme und damit relativ zur Maschine auszurichten. Das Positioniersystem wird hier ebenso als die Stelle aufgefasst an der die mechanische Verbindung des Druckmoduls und dem Druckkopf stattfindet.

Der "Druckkopf" setzt sich aus verschiedenen Komponenten zusammen. Unter anderem sind das die Druckmodule. Diese sind relativ zum Druckkopf ausgerichtet. Der Druckkopf ist relativ zur Maschine ausgerichtet. Damit kann die Lage einer Düse dem Maschinenkoordinatensystem zugeordnet werden.

Das "Druckfluid" wird als Wirkmedium für den 3D-Druckprozess benötigt. Es durchströmt den Druckkopf und wird vom Druckkopf in diskreten Tropfen zur gewünschten Zeit in Richtung Baufeld abgegeben.

Aufgabe der vorliegenden Erfindung ist es einen Druckkopf bereitzustellen, der die Nachteile des Standes der Technik vermeidet.

Gemäß der vorliegenden Erfindung wird die Aufgabe durch einen Druckkopf, insbesondere zum selektiven Auftragen von Druckfluid auf ein Partikelmaterial beim Herstellen dreidimensionaler Modelle mittels Schichtaufbautechnik, gelöst, der einen Druckkopftank zur Aufnahme von Druckfluid, der mit Druckkopfmodulen verbunden ist, durch die das Druckfluid in Pumpkammern und zu den Düsen geleitet wird, aufweist sowie zumindest einen metallischen Träger, an den die Druckkopfmodule angebracht sind. Weiterhin sind zum Durchführen des Druckfluids durch den metallischen Träger Kunststofffluidführungen vorgesehen, die durch den metallischen Träger positioniert werden.

Die Lösung der Erfindungsaufgabe besteht, allgemein gesagt, darin die metallischen Teile zur Positionierung derart auszusparen, dass Kunststoffteile zur Fluidführung eingesetzt werden können, die nicht direkt die Positionierung des Druckkopfes beeinflussen.

Gemäss eine bevorzugten Ausführungsform der vorliegenden Erfindung weist der Druckkopf dabei diskrete Druckkopfmodule auf.

Der Druckkopf nach der vorliegenden Erfindung kann vorzugsweise derart ausgestaltet sein, dass die Kunststofffluidführungen aus Kunststoffen wie Polyethylen, Polypropylen, Polyoxymethylen, Polysulfon, Polyarylsulfon, Polyimid, Polyetheretherketon, Polystyrol, Polymethylmethacrylat, Polyvinylclorid, Polyvinylflouriden, Polyamid oder/und Polytetrafluorethylen ausgeführt sind.

Gute Ergebnisse konnten auch erzielt werden, wenn faserverstärktes Material verwendet wird, da damit die Festigkeitseigenschaften verbessert werden können.

Je nach Ausgestaltung des Druckkopfes kann es auch vorteilhaft sein, wenn die Kunststofffluidführungen aus mehreren Teilen zusammengesetzt sind.

Gute Ergebnisse konnten erzielt werden, wenn der metallische Träger zumindest teilweise aus Aluminium, Magnesium, Titan, Edelstahl, Messing, Bronze, Invar, Kovar oder/und Kupferberyllium gebildet ist.

Nach einem Aspekt der Erfindung wird der Druckkopfes nach der Erfindung in einem 3D-Druckverfahren verwendet.

Ein weiterer Aspekt der Erfindung ist darüber hinaus ein Verfahren zum Herstellen eines 3D-Formteiles umfassend wiederholtes auftragen und selektives Verfestigen von Partikelmaterial, wobei ein Fluid, insbesondere ein Binder, mittels eines Druckkopfes nach der Erfindung selektiv auf das Partikelmaterial aufgebracht wird und diese Schritte so oft wiederholt werden bis das 3D-Formteil fertig gestellt ist.

Kurze Beschreibung der Figuren:
Figur 1: Schematische Darstellung der Komponenten eines pulverbasierten 3D-Druckers als geschnittener Schrägriss.
Figur 2: Schema des Fluidsystems
Figur 3: Schema der Anbindung der Module an den Druckkopf
Figur 4: Explosionszeichnung eines erfindungsgemäßen Druckkopfes
Figur 5: Zusammenbau eines erfindungsgemäßen Druckkopfes

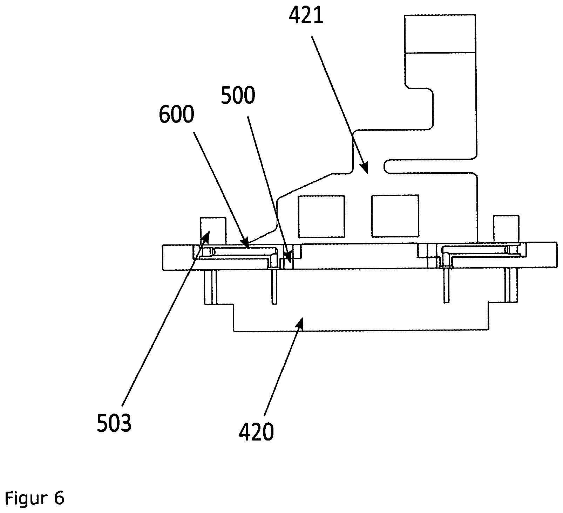

Figur 6: Schnittdarstellung eines erfindungsgemäßen Druckkopfes

Im folgenden wird die vorliegende Erfindung anhand von Beispielen näher erläutert, die bevorzugte Ausführungsformen darstellen.

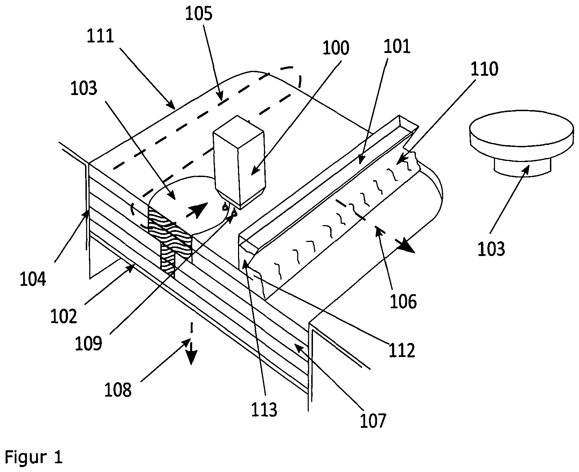

Ein 3D-Drucker für das Pulverbasierte 3D-Drucken weist einen Pulverbeschichter (101) auf. Mit diesem wird Partikelmaterial auf eine Bauplattform (102) aufgebracht und geglättet (Figur 1). Das aufgebrachte Partikelmaterial kann aus verschiedensten Materialien bestehen. Beispielsweise können Füllstoffe wie Sande, künstliche Sande und keramische Partikel verwendet werden. Die Fließeigenschaften dieser Materialien können stark unterschiedlich ausfallen. Verschiedene Beschichtertechniken lassen die Schichtbildung von trockenen frei fließenden Pulvern, über kohäsive schnittfeste Pulver, bis hin zu flüssigkeitsbasierten Dispersionen zu. Die Höhe der Pulverschichten (107) wird durch die Bauplattform (102) bestimmt. Sie wird nach dem Aufbringen einer Schicht abgesenkt. Beim nächsten Beschichtungsvorgang wird das entstandene Volumen verfüllt und der Überstand glattgestrichen. Das Ergebnis ist eine nahezu perfekt parallele und glatte Schicht definierter Höhe.

Nach einem Beschichtungsprozess wird die Schicht mittels eines Tintenstrahldruckkopfes (100) mit einer Druckflüssigkeit bedruckt. Das Druckbild entspricht dem Schnitt durch das Bauteil in der aktuellen Bauhöhe der Vorrichtung. Die Flüssigkeit trifft auf das Partikelmaterial und diffundiert langsam hinein.

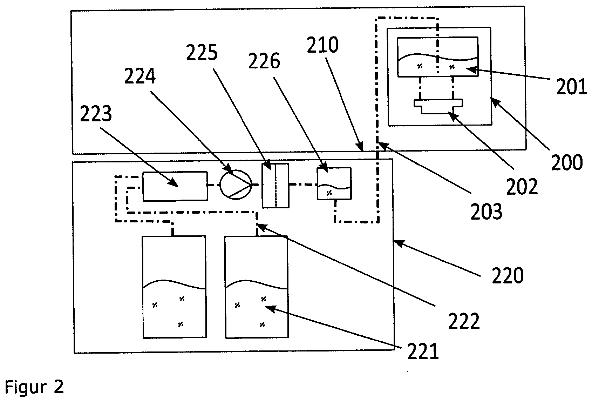

Das Fluidsystem in einem solchen 3D-Drucker besteht aus folgenden übergeordneten Baugruppen (siehe Figur 2): Einem Fluidversorgungsschrank (220) und einem Druckkopf (100,200) der in einem Bauraum bewegt wird.

Im Allgemeinen sind große Vorratsbehälter (221) vorhanden in denen Fluid für den Prozess bereitgehalten wird. Dieses Fluid wird dann - geschalten über einen Ventilblock (223) - mit einer Pumpe (224) über einen Filter gefördert und dann in einen Zwischentank (226) geleitet. Dieser weist einen Füllstandsensor auf. Wird trotz Pumpens ein bestimmter Füllstand nicht in einer gewissen Zeit erreicht, kann über den Ventilblock (223) ein anderer Vorratsbehälter (221) mit dem System verbunden werden.

Dieser Teil des Fluidsystems hat die Aufgabe Fluid für den Druckkopf (100,200) bereitzustellen. Dieser ist üblicherweise oberhalb des Niveaus des Fluidversorgungsschrankes (220) angebracht. Deshalb muss das Fluid von Tank (226) zum Druckkopf (200) mit Überdruck befördert werden. Dies kann beispielsweise über ein Anlegen von Überdruck an den Tank (226) erfolgen.

Die Verschlauchung (203) läuft durch die Maschine und die Energieketten zum Druckkopf (200). Dieser wird über steckbare Verbinder angeschlossen.

Der Druckkopf (200) weist wieder einen Tank, den Druckkopftank (201) auf. Dessen Füllstand wird durch einen Sensor kontrolliert. Anhand des Sensors schaltet die Steuerung den Überdruck am Zwischentank im Fluidversorgungsschrank (220).

Der Druckkopftank ist über Ventile und Filter mit den Modulen (202) verbunden. Diese sind für eine exakte Ausrichtung auf metallische Träger montiert, durch die das Fluid in den Modulkörper geleitet wird. Von hier aus gelangt es in die Pumpkammern und zu den Düsen. Beide Strukturen sind stark miniaturisiert.

Durch den in den Pumpkammern über Piezoelemente erzeugten Druck bilden sich an den Düsen schaltbar einzelne Tropfen, die die Düse mit hoher Geschwindigkeit verlassen und auf das Pulver treffen.

Wesentlich für die beim Pulverbasierten 3D-Druck verwendeten Fluide ist ihr funktioneller Charakter. Somit wirkt das Fluid immer wie oben beschrieben auf das Fluidsystem und das Fluidsystem wirkt ebenso auf das Fluid zurück.

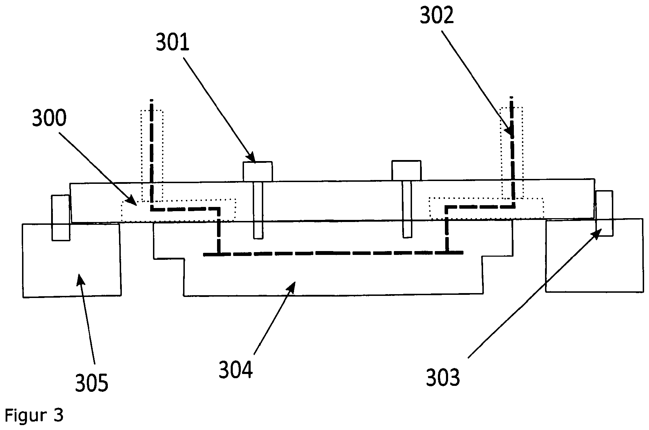

Fast alle Teile des Fluidsystems können in einfacher Weise mit Hilfe von Kunststoffen aufgebaut werden, die chemisch beständig sind. Die Ausnahme hier bildet die Anbindung der Module (202) an den Druckkopf (200). Hier ist je nach Bauart der Module die Anbindung über Kunststoffe nicht durchführbar. Besonders Module, die die mechanische und fluidische Schnittstelle mit einer Fläche realisieren, sind hier problematisch. Ein Beispiel für ein solches Modul (304) ist das Modul SL128 von Dimatix (siehe Figur 3).

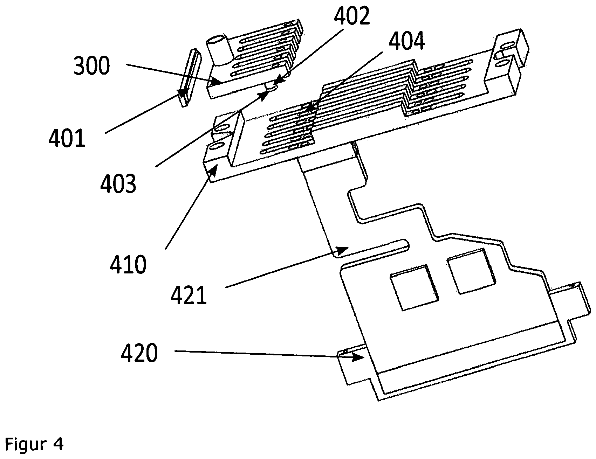

Erfindungsgemäß wird die fluidische Verbindung durch eine Kunststofffluidführung (300) erzielt, die durch einen metallischen Träger (410) greift und ebenso durch diesen positioniert wird, was in Figur 4 beispielhaft dargestellt ist.

Da eine hohe Düsendichte angestrebt ist, werden die Module eng aneinander gesetzt. Die Folienleiter (421) der Module (420) bedingen, dass die Anbindung an den Druckkopf (305) durch einen Steg in Längsrichtung des Modules erfolgen muss.

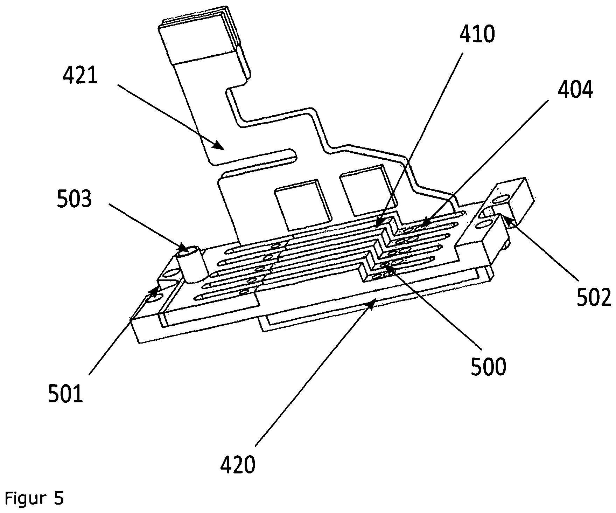

Besonders bevorzugt werden die Stege für die Einzelmodule als eine Art "Harfe" (410) ausgebildet. Außerhalb des Moduls sind dabei jeweils ein Zentrierelement (501), ein Drehlagenanschlag (502) und Befestigungslöcher vorgesehen (siehe Figur 5).

Die Fluidversorgung ist bei den beschriebenen Modulen (304) außerhalb von den Montagegewinden. Folglich kann das Fluid nach außen herausgeführt und zu einem Anschluss (503) zusammengefasst werden.

Um die Herstellung des Teils zu vereinfachen, wird das Kunststoffteil mehrteilig ausgeführt. Hierbei wird das Teil für die fräsende Bearbeitung vorgesehen. Der Fräserzugang wird durch einen Deckel (401) verschlossen.

Der metallische Träger weist Durchgangslöcher (500) für die Anbindung der Module auf. Im Modul ist jeweils korrespondierend ein Gewinde vorgesehen. Die exakte Platzierung des Trägers relativ zum Modul wird über ein Werkzeug sichergestellt.

Dieses Werkzeug nimmt die Module auf und nutzt die Präzisionsbohrungen des Moduls, um dieses relativ zum Werkzeug zu justieren. Dabei ist die Verbindung steckbar über Passstifte realisiert.

Sind alle Module gesteckt, wird der Modulträger auf das Werkzeug aufgesetzt. Dessen Lage wird über Anschläge bestimmt. Die Module werden im nächsten Schritt mit den Schrauben in Ihrer Lage fixiert und vom Werkzeug abgezogen.

Das Kunststoffteil des Modulträgers trägt die Dichtung und wird mit einer Schraube auf die Dichtfläche gedrückt. Die Dichtung kann als einfacher O-Ring (403) ausgestaltet sein. Konstruktiv werden die wesentlichen Biegemomente vom Metallteil aufgenommen. Der Kunststoffteil wird vor der Modulmontage in den metallischen Träger eingesetzt.

Das Kunststoffbauteil wird auf eine Vermeidung von fluidisichen Toträumen optimiert. Dabei werden, sofern sinnvoll, alle Bohrungen und Taschen mit Radienfräsern ausgeführt.

Eine einfache Gestaltung als Frästeil ermöglicht ein zweiteiliger Aufbau. Ein Teil stellt die eigentliche Funktion das zweite lediglich einen Deckel (401) dar. Dieser Deckel kann dann über Klemmen, Kleben oder Schweißen abgedichtet werden.

Grundsätzlich sind für die beschriebene Ausführung viele Kunststoffe geeignet. Dabei sind besonders bevorzugt solche zu verwenden, die eine hohe chemische Beständigkeit aufweisen.

Beispielweise kann Polyethylen (PE) zum Einsatz kommen. Dieses Material weist eine hohe chemische Beständigkeit gegenüber vielen Medien auf. Sein schwacher E-Modul ist bei dieser Ausführung von untergeordneter Bedeutung. Ebenso kann die relativ hohe Wärmeausdehnung von ca. 70 ppm/K erfindungsgemäß nicht die Genauigkeit der Anordnung stören. Das Beispiel Polyethylen kann stellvertretend für die Gruppe der Polyolefine gelten (Zum Beispiel PP oder POM). Diese sind im Eigenschaftsspektrum grundsätzlich ähnlich.

Ebenso können Polyamide (PA) verwendet werden. Hier ist die erfindungsgemäße Konstruktion besonders auf Grund der hohen Wasseraufnahme und -abgabe des Polymers nützlich. Die verschiedenen Varianten der Polyamide, die sich durch ihre Kettenlänge der aufeinanderfolgenden Kohlenstoffatome unterscheiden, sind ebenso prinzipiell geeignet.

Stellvertretend für halogenierte, thermoplastische Kunststoffe ist beispielsweise Polytetrafluorethylen (PTFE). Ähnlich wie bei Polyethylen sind hier eine äußerst gute chemische Beständigkeit mit schwachen mechanischen Eigenschaften gepaart. Die Eigenschaft der hohen Einsatztemperatur wird bei den hier betrachteten Druckköpfen nicht genutzt. In dieser Gruppe ist auch PVDF als gängiger Kunststoff zu finden, der erfindungsgemäß verwendet werden kann.

Ebenso grundsätzlich geeignet ist Polyvinylchlorid (PVC). Dieses Polymer neigt allerdings in vielen Lösemitteln zu einem starken Quellen.

Ebenso bevorzugt können Polyetheretherketon (PEEK) oder andere sogenannte Hochleistungspolymere verwendet werden. Hier steht bei der Verwendung wieder die chemische Beständigkeit im Vordergrund. Bei PEEK ist dies besonders die geringe Wasseraufnahme des Polymers. Ebenso geeignet sind Polysulfon (PSU), Polyarylsulfon (PPSU) und Polyimid (PI).

Die oben genannten Polymere werden aus Sicht der Verarbeitung Thermoplaste genannt. Die Umformung erfolgt in großen Serien durch Spritzgießen in heißem Zustand. Die im geschmolzenen Zustand vorliegenden hohen Viskositäten erfordern allerdings teure Werkzeuge. Für Kleinserien eignet sich deshalb die spannende Bearbeitung.

Die erfindungsgemäßen Kunststoffteile werden also bevorzugt und vorteilhafter Weise durch Fräsen hergestellt.

Eine besondere Variante der Fertigung der erfindungsgemäßen Bauteile ist das Lasersintern. Hierbei können besonders komplexe Geometrien erstellt werden. Im Material ist man oft auf PA12 eingeschränkt. Dieses Material kann aber erfindungsgemäß ohne Nachteile eingesetzt werden.

Auch können sogenannte Duroplaste als Werkstoff benutzt werden. Hierbei sind ebenso gegossene Teile in kleinen Serien wirtschaftlich realisierbar. Eine Nachbearbeitung der Teile ist aber hier im Allgemeinen erforderlich.

Die meisten Duroplaste sind in den hier angesprochenen Lösemitteln nicht löslich. Eine massive Neigung zum Quellen ist aber manchmal festzustellen. Als Basismaterialien können hier, nicht erschöpfend, Epoxidharze (EP), Polyurethane (UR), vernetzte Polyacrylate (z.B. x-PMMA) und Polystyrole (x-PS), Harnstoffharze(UF), Phenoplaste (PF), Melaminharze (MF) und ungesättigte Polyesterharze (UP) genannt werden.

Alle hier genannten Polymere können mit Füllstoffen versehen sein. Diese können z.B. Glas- oder Kohlefasern sein. Ebenso üblich sind Mikrofüller aus verschiedenen mineralischen Stoffen (z.B. Marmor).

### Bezugszeichenliste

- 100: Druckkopf
- 101: Beschichter
- 102: Bauplattform
- 103: Bauteil
- 104: Baubehälter
- 105: Druckkopfbahn
- 106: Beschichterbahn
- 107: Pulverschichten
- 108: Richtung der Bauplattformbewegung
- 109: Dosierte Tropfen
- 110: Pulverwalze
- 111: Baufeldberandung
- 112: Beschichterspalt
- 113: Beschichtervorrat
- 200: Druckkopf
- 201: Druckkopftank
- 202: Modul
- 203: Druckkopfversorgungsleitung
- 210: Prozessraum
- 220: Fluidversorgungsschrank
- 221: Vorratsbehälter
- 222: Systemanschlüsse
- 223: Ventilblock
- 224: Pumpe
- 225: Filter
- 226: Zwischentank
- 300: Kunststofffluidführung
- 301: Verbindungselement
- 302: Fluidpfad
- 303: Positionierelement
- 304: Modul
- 305: Druckkopf
- 401: Deckel
- 402: Durchdringendes Element
- 403: O-Ring
- 404: Öffnung für Durchdringung im metallischen Träger
- 410: Metallischer Träger
- 420: Modul
- 421: Folienleiter
- 500: Befestigungsbohrung
- 501: Zentrierelement
- 502: Drehlagenanschlag
- 503: Zusammengeführte Fluidleitung
- 600: Hohlraum in der Fluidführung

## Patentansprüche

1. Druckkopf (100, 200, 305), insbesondere zum selektiven Auftragen von Druckfluid auf ein Partikelmaterial beim Herstellen dreidimensionaler Modelle mittels Schichtaufbautechnik, aufweisend
mehrere Druckmodule (202, 304, 420), wobei ein Druckmodul ein modular aufgebauter Einzeltropfenerzeuger mit mehreren Düsen ist,
einen Druckkopftank (201) zur Aufnahme von Druckfluid, der mit den Druckkopfmodulen (202, 304, 420) verbunden ist, durch die das Druckfluid in die Pumpkammern und zu den Düsen der Druckkopfmodule (202, 304, 420) geleitet wird;
zumindest einen metallischen Träger (410), an den die Druckkopfmodule (202, 304, 420) angebracht sind;
**dadurch gekennzeichnet, dass** zum Durchführen des Druckfluids durch den metallischen Träger (401) Kunststofffluidführungen (300) vorgesehen sind, die durch den metallischen Träger (410) positioniert werden.

2. Druckkopf (100, 200, 305) nach Anspruch 1, **dadurch gekennzeichnet, dass** der Druckkopf diskrete Druckkopfmodule aufweist.

3. Druckkopf (100, 200, 305) nach einem der vorhergehenden Ansprüche, **dadurch gekennzeichnet, dass** die Kunststofffluidführungen Polyethylen, Polypropylen, Polyoxymethylen, Polysulfon, Polyarylsulfon, Polyimid, Polyetheretherketon, Polystyrol, Polymethylmethacrylat, Polyvinylclorid, Polyvinylflouriden, Polyamid oder/und Polytetrafluorethylen aufweisen.

4. Druckkopf (100, 200, 305) nach einem der vorhergehenden Ansprüche, **dadurch gekennzeichnet, dass** die Kunststofffluidführungen (300) aus mehreren Teilen zusammengesetzt sind.

5. Druckkopf (100, 200, 305) nach einem der vorhergehenden Ansprüche, **dadurch gekennzeichnet, dass** der metallische Träger (410) zumindest teilweise aus Aluminium, Magnesium, Titan, Edelstahl, Messing, Bronze, Invar, Kovar oder/und Kupferberyllium gebildet ist.

6. Verwendung eines Druckkopf (100, 200, 305) nach einem der vorhergehenden Ansprüche 1 - 5 in einem 3D-Druckverfahren.

7. Verfahren zum Herstellen eines 3D-Formteiles umfassend wiederholtes auftragen und selektives Verfestigen von Partikelmaterial, wobei ein Fluid, insbesondere ein Binder, mittels eines Druckkopfes (100, 200, 305) nach einem der Ansprüche 1-5 selektiv auf das Partikelmaterial aufgebracht wird und diese Schritte so oft wiederholt werden bis das 3D-Formteil fertig gestellt ist.

## Claims

1. A print head (100, 200, 305), in particular for the selective application of printing fluid onto a particulate material in the production of three-dimensional models by means of a layer construction technique, comprising a plurality of printing modules (202, 304, 420), wherein a printing module is a modular single-drop generator comprising a plurality of nozzles,
a print head tank (201) for containing printing fluid, which is connected to the print head modules (202, 304, 420) through which the printing fluid is passed into the pump chambers and to the nozzles of the print head modules (202, 304, 420);
at least one metallic support (410) to which said print head modules (202, 304, 420) are attached;
**characterised in that** plastic fluid guides (300) are provided for passing the printing fluid through the metallic support (401) and are positioned by the metallic support (410).

2. The print head (100, 200, 305) according to claim 1, **characterised in that** the print head comprises discrete print head modules.

3. The print head (100, 200, 305) according to any one of the preceding claims, **characterised in that** the plastic fluid guides comprise polyethylene, polypropylene, polyoxymethylene, polysulfone, polyarylsulfone, polyimide, polyetheretherketone, polystyrene, polymethyl methacrylate, polyvinyl chloride, polyvinyl fluorides, polyamide or/and polytetrafluoroethylene.

4. The print head (100, 200, 305) according to any one of the preceding claims, **characterised in that** the plastic fluid guides (300) are composed of a plurality of parts.

5. The print head (100, 200, 305) according to any one of the preceding claims, **characterised in that** the metallic support (410) is formed at least partially from aluminium, magnesium, titanium, stainless steel, brass, bronze, invar, cover or/and copper beryllium.

6. Use of a print head (100, 200, 305) according to any one of preceding claims 1-5 in a 3D printing method.

7. A method for producing a 3D moulded part comprising repeated application and selective solidification of particulate material, wherein a fluid, in particular a binder, is applied selectively onto the particulate material by means of a print head (100, 200, 305) according to any one of claims 1-5 and these steps are repeated until the 3D moulded part is completed.

## Revendications

1. Tête d'impression (100, 200, 305), notamment pour l'application sélective d'un fluide d'impression sur un matériau particulaire lors de la production de modèles tridimensionnels au moyen d'une technologie de construction couche par couche, comprenant
une pluralité de modules d'impression (202, 304, 420), un module d'impression étant un générateur modulaire de gouttes individuelles avec une pluralité de buses,
un réservoir de tête d'impression (201) destiné à contenir un fluide d'impression, connecté aux modules de tête d'impression (202, 304, 420) à travers lesquels le fluide d'impression est passé dans les chambres de pompe et aux buses des modules de tête d'impression (202, 304, 420) ;
au moins un support métallique (410) auquel sont fixés lesdits modules de tête d'impression (202, 304, 420) ;
**caractérisé en ce que** des guides de fluide plastiques (300) sont prévus pour faire passer le fluide d'impression à travers le support métallique (401) et sont positionnés par le support métallique (410).

2. Tête d'impression (100, 200, 305) selon la revendication 1, **caractérisée en ce que** la tête d'impression comprend des modules de tête d'impression distincts.

3. Tête d'impression (100, 200, 305) selon l'une quelconque des revendications précédentes, **caractérisée en ce que** les guides de fluide plastiques comprennent du polyéthylène, du polypropylène, du polyoxyméthylène, de la polysulfone, de la polyarylsulfone, du polyimide, du polyétheréthercétone, du polystyrène, du polyméthacrylate de méthyle, du chlorure de polyvinyle, des polyfluorures de vinyle, du polyamide ou/et du polytétrafluoroéthylène.

4. Tête d'impression (100, 200, 305) selon l'une quelconque des revendications précédentes, **caractérisée en ce que** les guides de fluide plastiques (300) sont composés d'une pluralité de pièces.

5. Tête d'impression (100, 200, 305) selon l'une quelconque des revendications précédentes, **caractérisée en ce que** le support métallique (410) est formé au moins partiellement en aluminium, magnésium, titane, acier inoxydable, laiton, bronze, invar, covar ou/et béryllium de cuivre.

6. Utilisation d'une tête d'impression (100, 200, 305) selon l'une quelconque des revendications 1-5 précédentes dans un procédé d'impression 3D.

7. Procédé de fabrication d'une pièce moulée 3D comprenant l'application répétée et la solidification sélective de matériau particulaire, dans lequel procédé un fluide, notamment un liant, est appliqué sélectivement sur le matériau particulaire au moyen d'une tête d'impression (100, 200, 305) selon l'une quelconque des revendications 1-5 et ces étapes sont répétées jusqu'à ce que la pièce moulée 3D soit complète.
